Europäisches Patentamt

**European Patent Office**

**Office européen des brevets**

(11) Veröffentlichungsnummer: **0 226 841**
**A1**

(12) # EUROPÄISCHE PATENTANMELDUNG

(21) Anmeldenummer: **86116275.8**

(22) Anmeldetag: **24.11.86**

(51) Int. Cl.⁴: **G 01 S 3/84**
**G 01 S 7/62**

(30) Priorität: **19.12.85 DE 3544890**

(43) Veröffentlichungstag der Anmeldung:
**01.07.87 Patentblatt 87/27**

(84) Benannte Vertragsstaaten:
**DE FR GB IT NL SE**

(71) Anmelder: **Fried. Krupp Gesellschaft mit beschränkter Haftung**
**Altendorfer Strasse 103**
**D-4300 Essen 1(DE)**

(72) Erfinder: **Thiele, Rudolf, Dr.rer.nat.**
**Feldstrasse 17**
**D-2804 Lilienthal 3(DE)**

(54) **Eindimensionales Rundumsichtbild.**

(57) Bei einem eindimensionalen Rundumsichtbild einer Empfangsanlage für Wellenenergie zur Darstellung der Wellenenergieverteilung im Raum wird in einem geschlossenen Kurvenzug der azimutale Verlauf der Stärke der Wellenenergie längs einer Kreislinie als x-Achse dargestellt. Zur Erzielung eines räumlichen Eindrucks der Wellenenergieverteilung sind für eine Vielzahl von vorgegebenen Elevationswinkeln der Einfallsrichtung von Wellenenergie solche Kurvenzüge bezogen auf jeweils eine von konzentrischen Kreislinien dargestellt. Die Kreisliniendurchmesser sind durch orthographische Projektion in die Bildebene festgelegt.

EP 0 226 841 A1

Fig.2

0226841

FRIED. KRUPP GESELLSCHAFT MIT BESCHRÄNKTER HAFTUNG
in 4300 Essen


Eindimensionales Rundumsichtbild
==================================

Die Erfindung betrifft ein eindimensionales Rundumsichtbild der im Oberbegriff des Anspruchs 1 definierten Gattung.

Bei einem bekannten Panoramabild einer Passivsonaranlage der genannten Art (DE-AS 19 57 203) wird die Wellenenergieverteilung im Raum in einer Draufsicht auf die Azimutebene dargestellt, in welcher sich die Sonaranlage befindet. Der geschlossene Kurvenzug repräsentiert die von einem äußeren Horizontradius nach innen gehende Amplitudenfüllschrift der unter azimutaler Einfallsrichtung $\alpha_i$ einfallenden Signalstärke. Für einen Operateur oder Beobachter ist dabei aus dem Panoramabild nicht erkennbar, ob eine durch eine Ausbuchtung im Kurvenzug detektierbare Signalquelle mit der Sonaranlage in gleicher Horizontalebene oder wesentlich höher oder tiefer liegt. Dies ist insbesondere bei Sonaranlagen in U-Booten von Nachteil, für die eine dreidimensionale Überwachung der Wasserumgebung von wesentlicher Bedeutung ist.

Bei einer bekannten Vorrichtung zur Bestimmung und Anzeige der Winkelposition eines Wasserfahrzeugs relativ zu einem Unterwasser-Fixpunkt (US-PS 3 602 877) werden auf einem PPI-Display sog. Höhenkreise als konzentrische Ringe dargestellt. Die Höhenkreise haben einen konstanten Abstand voneinander. Jedem Höhenkreis ist ein Winkel zugeordnet, wobei Kreis- und Winkelabstände gleich groß sind. Der von der Vorrichtung bestimmte Schräg- oder Tiefenwinkel zu dem Unterwasser-Fixpunkt wird durch einen Lichtfleck (Spot) angezeigt, der entsprechend seinem Winkelwert auf einem Höhenkreis oder zwischen den Höhenkreisen dargestellt wird.

Der Erfindung liegt die Aufgabe zugrunde, ein eindimensionales Rundumsichtbild der eingangs genannten Art derart zu verbessern, daß unter Azimutwinkeln $\alpha_i$ und Elevationswinkeln $\varepsilon_i$ einfallende Wellenenergie entsprechend ihrer Empfangsstärke übersichtlich dargestellt wird, wobei dem Beobachter weitgehend ein räumlicher Eindruck des Wellenenergieeinfalls vermittelt werden soll.

Die Aufgabe ist bei einem eindimensionalen Rundumsichtbild der im Oberbegriff des Anspruchs 1 definierten Gattung erfindungsgemäß durch die Merkmale im Kennzeichenteil des Anspruchs 1 gelöst.

Aus dem erfindungsgemäßen Rundumsichtbild läßt sich aus den für eine Vielzahl von sog. Höhen- oder Tiefenkreisen dargestellten Kurvenzüge nicht nur wie bisher der Azimutwinkel eines einfallenden Signals, sondern auch dessen Elevationswinkel ablesen. Im folgenden werden positive Elevationswinkel $+\varepsilon$ als Höhenwinkel und negative Elevationswinkel $-\varepsilon$ als Tiefenwinkel bezeichnet. Durch die orthographische Projektion dieser Höhen- bzw. Tiefenkreise in die Ebene wird dem Beobachter ein räumlicher Eindruck vermittelt, als ob er in eine sich über ihm wölbende oder unter ihm ausbreitende Halbkugelschale jeweils von unten, d.h. von der Basis her, hineinsieht. Die an den radial nach innen vorspringenden Ausbuchtungen der einzelnen Kurvenzüge erkennbaren Signale mit einer gegenüber dem Rauschen hervortretenden Nutzamplitude erscheinen entsprechend dem Höhen- oder Tiefenwinkel ($\pm\,\ell_i$) ihrer Einfallsrichtung bezüglich der Ebene, in welcher sich der Beobachter befindet, mehr oder weniger weit zum Zenit der Halbkugel hin verschoben. Ein vertikal oberhalb oder unterhalb des Beobachters einfallendes Signal erscheint im Zenit, ein horizontal zu dem Beobachter einfallendes Signal erscheint am äußersten unteren Rand der Halbkugel. Die einzelnen Kurvenzüge stellen die Amplitudenhüllschrift, d. h. die azimutale Hüllkurve, der empfangenen Wellenenergie dar. Bei geringer Vertikalauflösung, also großer Stufung der den Höhen- oder Tiefenkreisen zugeordneten Elevationswinkel $\ell$, können die Kurvenzüge in Amplitudenfüllschrift dargestellt werden, bei welchen der Raum zwischen Hüllkurve und zugeordneter Kreislinie gleich hell angezeigt wird.

Eine vorteilhafte Ausführungsform der Erfindung ergibt sich aus Anspruch 2. Werden die Kurvenzüge mit gleicher Helligkeit dargestellt, so ergibt sich ein guter räumlicher Eindruck bis zu einem Elevationswinkel von etwa $\pm\,70^\circ$. Dieser räumliche Eindruck wird aufrechterhalten, wenn spätestens dann die den Höhen- oder Tiefenkreisen zugeordneten Kurvenzüge mit zunehmenden Höhen- oder Tiefenwinkeln der Höhen- oder Tiefenkreise mit zunehmender Helligkeit geschrieben werden. Wird diese Helligkeitssteuerung zu kleineren Höhen- oder Tiefenwinkeln hin fortgesetzt, so wird insgesamt der räumliche Eindruck verbessert.

Eine vorteilhafte Ausführungsform der Erfindung ergibt sich auch aus Anspruch 3. Üblicherweise ist es ausreichend, daß auf dem eindimensionalen Rundumsichtbild nur ein nach oben oder unten sich erstreckender Halbkugelraum dargestellt wird. In besonderen Anwendungsfällen, z. B. bei einem Panoramabild einer Passivsonaranlage eines U-Bootes, ist es mitunter erforderlich, sowohl Höhenwinkel als auch Tiefenwinkel zu berücksichtigen. In diesem Fällen ist es zur Vermeidung von Zweideutigkeiten von Vorteil, die den Tiefenkreisen zugeordneten Kurvenzüge in einer anderen Farbe als die den Höhenkreisen zugeordneten Kurvenzüge darzustellen.

Eine vorteilhafte Ausführungsform der Erfindung ergibt sich auch aus Anspruch 4. Durch diese Maßnahme läßt sich in dem Rundumsichtbild der Elevationswinkel der Einfallsrichtung eines Signals ohne Ausmessen schnell abschätzen. In Verbindung mit den Ausführungsformen der Erfindung gemäß Anspruch 5 und 6 läßt sich dies ohne Beeinträchtigung der Übersichtlichkeit und Anschaulichkeit des Rundumsichtbildes erreichen.

Eine vorteilhafte Ausführungsform der Erfindung ergibt sich auch aus Anspruch 6, insbesondere in Verbindung mit Anspruch 7. Durch diese Maßnahmen läßt sich auch ein im Zenit einfallendes Signal noch ohne Verlust an Übersichtlichkeit darstellen.

Die Erfindung ist anhand eines in der Zeichnung dargestellten Ausführungsbeispiels im folgenden näher beschrieben. Es zeigen:

Fig. 1 eine schematische Darstellung einer
dreidimensionalen Anordnung von fünf
Schallquellen im Raum in Seitenansicht
(oben) und in Draufsicht (unten),

Fig. 2 ein für die Schallquellenanordnung

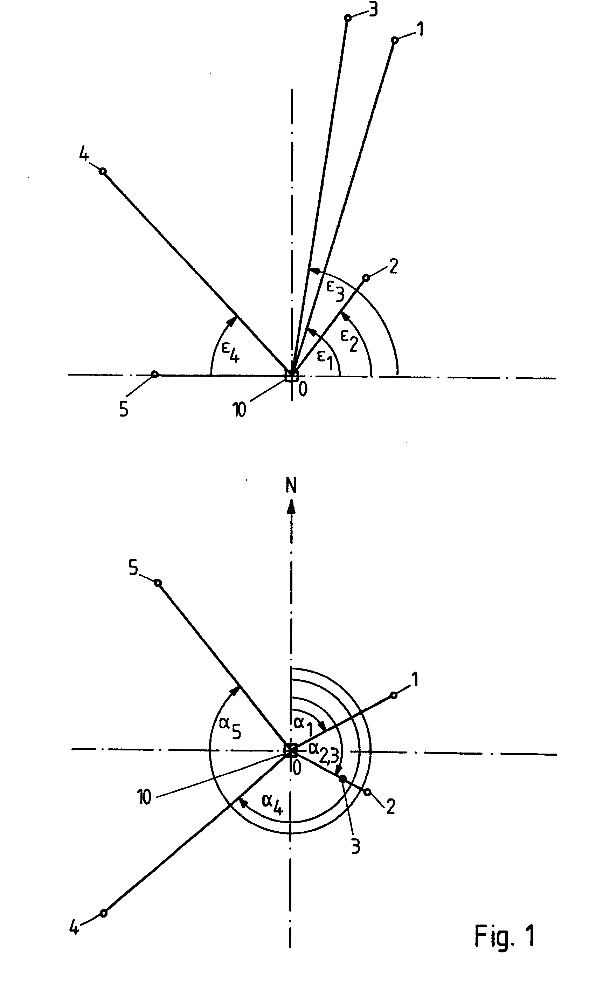

in Fig. 1 erstelltes eindimensionales Rundumsichtbild,

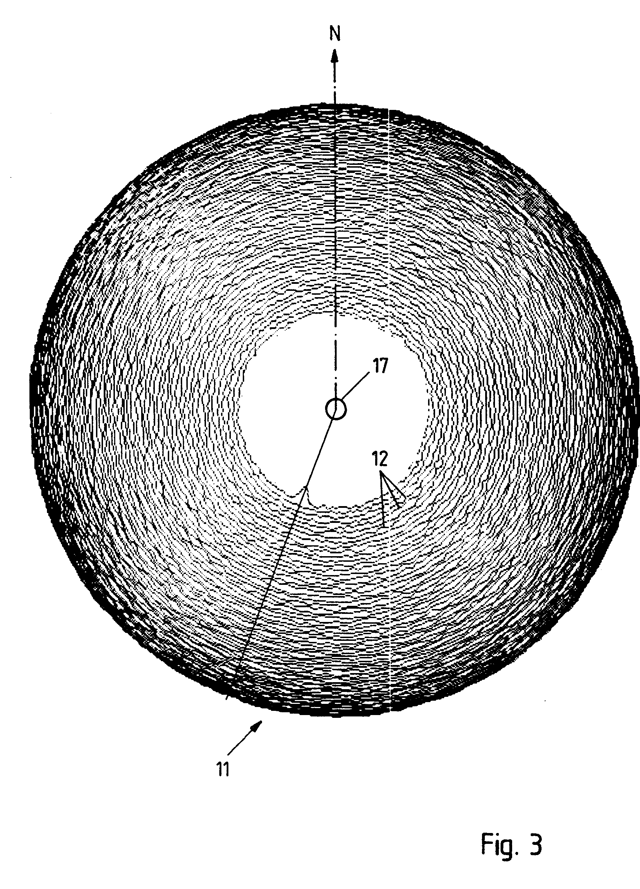

Fig. 3 ein für eine andere Schallquellenanordnung dargestelltes Rundumsichtbild, bei welchem nur Elevationswinkel $\epsilon_i < 70°$ berücksichtigt sind,

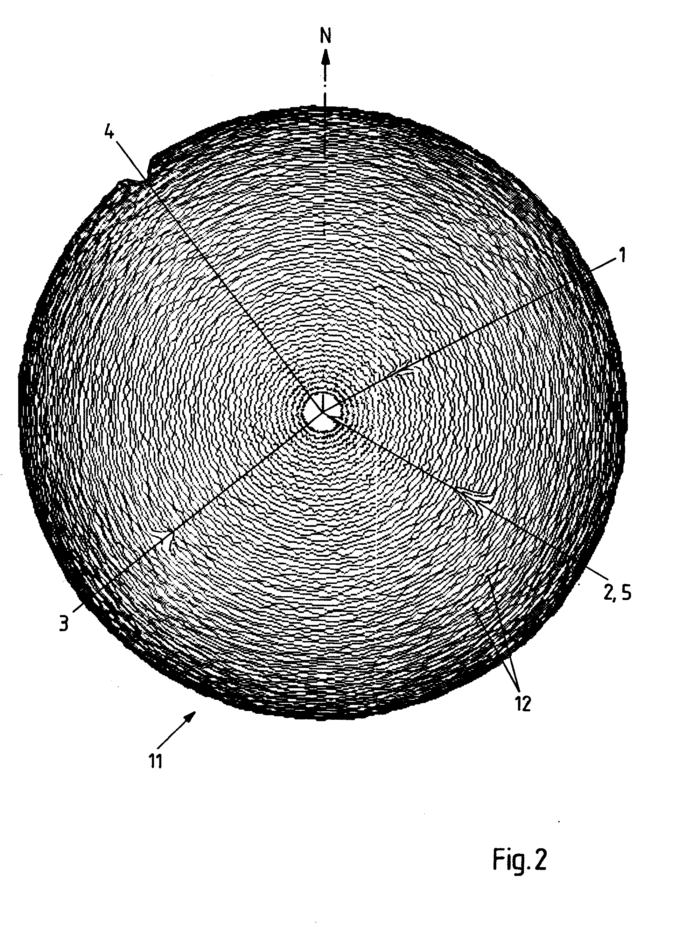

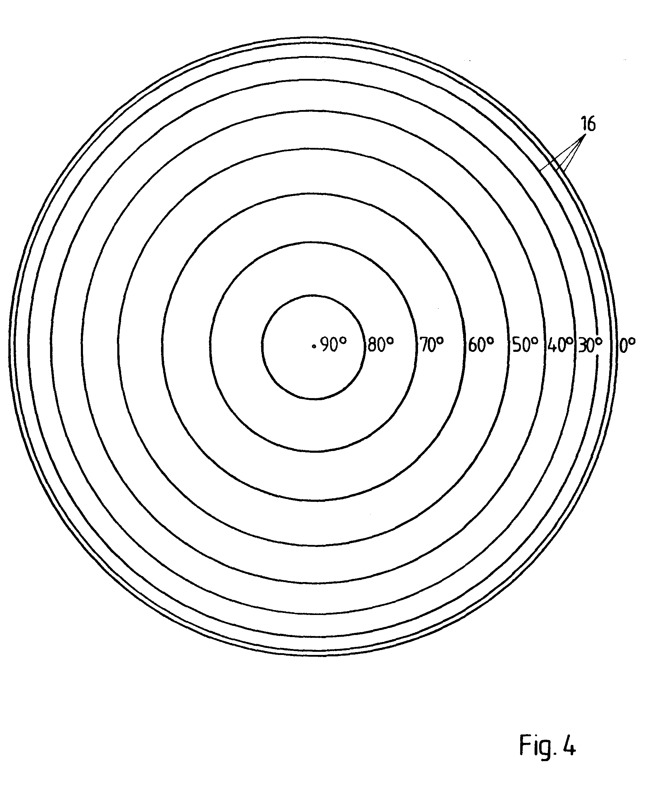

Fig. 4 eine Darstellung von im Rundumsichtbild in Fig. 2 enthaltenen Markierungsringen,

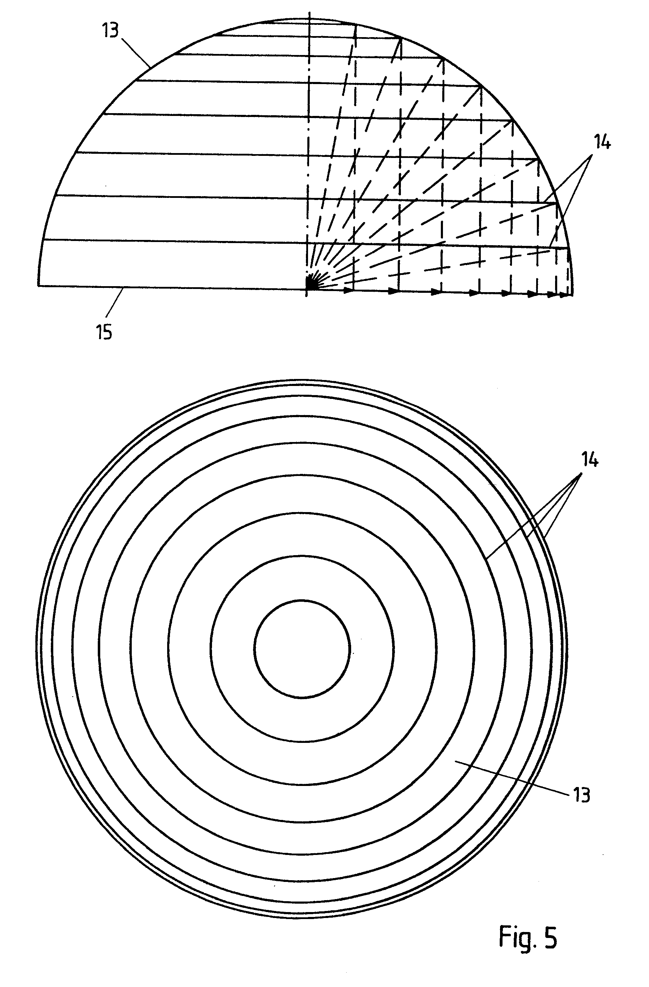

Fig. 5 eine Darstellung einer Halbkugel in
Seitenansicht (oben) und Draufsicht
(unten) zur Veranschaulichung der
orthographischen Projektion.

In Fig. 1 sind fünf im Raum verteilte Schallquellen
1 bis 5 schematisch dargestellt, die zu einem im
Punkte O befindlichen Beobachter unter einem positiven Elevationswinkel $\epsilon_i$ und einem Azimutwinkel $\alpha_i$
angeordnet sind, wobei i für die Zahlen 1 bis 5
steht. Die von den Schallquellen 1 bis 5 abgestrahlten Signale werden mit einer im Punkte O befindli-

chen Sonaranlage 10 empfangen und in einem sog. Panoramabild 11, als Beispiel eines eindimensionalen Rundumsichtbildes, entsprechend ihrer Einfallsrichtung $\varepsilon_i$, $\alpha_i$, angezeigt.

In dem in Fig. 2 zu sehenden Panoramabild 11 wird die von der Passivsonaranlage aus der Umgebung über einem Azimut von $360^o$ empfangene Schallenergie als Amplitudenhüllschrift in einem geschlossenen Kurvenzug 12 längs einer Kreislinie dargestellt, auf der als unabhängige Variable der Azimutwinkel $\alpha_i$ der Einfallsrichtung abgetragen ist. Die Stärke der empfangenen Schallenergie ist als abhängige Variable in zu dem Bild- oder Kreislinienmittelpunkt weisender Radialrichtung abgetragen. Jeder Kurvenzug 12 gilt dabei für einen Elevationswinkel $\varepsilon$ und ist längs einer Kreislinie dargestellt, deren Kreisdurchmesser ein Maß für den zugeordneten Elevationswinkel $\varepsilon$ ist. Dieses Maß ist so festgelegt, daß der jeweilige Kreisdurchmesser gleich dem Kosinus des Elevationswinkels $\varepsilon$ multipliziert mit dem größten Durchmesser aller Kreislinien ist. Die Anzahl der einzelnen Elevationswinkel $\varepsilon$ ist dabei willkürlich festgelegt, wobei die Winkelstufung konstant ist und beispielsweise $1^o$ beträgt. Die Entstehung dieser konzentrischen Kreislinien, welche jeweils die x-Achse für den azimutalen Verlauf der Signalstärke in verschiedenen parallelen Ebenen oberhalb der Horizontalebene, in welcher die Sonaranlage liegt, darstellen, läßt sich dabei bildlich so vorstellen, daß in vorzugsweise gleicher Elevationswinkelstufung auf einer Halbkugel 13 (Fig. 5) entsprechende Höhenkreise 14 festgelegt und diese in die Ebene 15, in welcher sich auch die Sonaranlage 10 befindet, Wie in Fig. 2 zu erkennen ist, läßt sich die in Fig. 1 dargestellte Verteilung der fünf Schallquellen 1 bis 5 im Raum in dem Panoramabild 11 mit räumlichem Eindruck wiederfinden. Die von Schallquellen 1 bis 5 abgestrahlten Schallsignale, die von der Passivsonaranlage 10 mit gutem Nutz-/Stör-Verhältnis empfangen werden, bewirken eine wesentliche Ausbuchtung einiger den azimutalen Schallstärkenverlauf kennzeichnenden Kurvenzüge 12 in Richtung zu dem Bildmittelpunkt. Deutlich sind diese Ausbuchtungen für die fünf Schallquellen 1 bis 5 in Fig. 2 zu sehen. Zur Verdeutlichung ist durch jede Ausbuchtung ein mit 1, 2, 3, 4, 5 bezeichneter Peilstrahl gezeichnet. Im Mittelpunkt des Bildes befindet sich die nicht dargestellte Passivsonaranlage. Durch Ausmessen des Azimutwinkels $\alpha_i$ des Peilstrahls, bezogen auf die Nordrichtung N und durch Ausmessen der Radien derjenigen Kreislinien, welche die x-Achse für Kurvenzüge 12 mit solchen Ausbuchtungen bilden, läßt sich der Azimutwinkel $\alpha_i$ und der Elevationswinkel $\varepsilon_i$ der Schallquellen 1 bis 5 exakt bestimmen. Existieren parallele Ausbuchtungen in nebeneinanderliegenden Kurvenzügen 12, so ist für die Bestimmung des Elevationswinkels $\varepsilon_i$ der Kurvenzug 12 mit der maximalen Ausbuchtung maßgebend.

Das Ablesen des Elevationswinkels $\varepsilon_i$ wird vereinfacht, wenn in dem Panoramabild 11 Markierungsringe 16 dargestellt werden, wie dies Fig. 4 zeigt. Diese Markierungsringe 16 sind konzentrische Kreise um den Bildmittelpunkt, deren Durchmesser in gleicher Weise in Abhängigkeit von den zugehörigen Elevationswinkeln $\varepsilon$ festgelegt ist, wie die Durchmesser der Kreislinien für die Kurvenzüge 12. Um die Übersichtlichkeit und Anschauung des Panoramabildes 11 projiziert werden. Dies ist in Fig. 5 für ausgewählte Elevationswinkel $\mathcal{E}$ mit einer Winkelstufung von 10° veranschaulicht.

Wie insbesondere aus Fig. 3 erkannt werden kann, entsteht durch diese orthographische Projektion der Kreislinien, welche für die Kurvenzüge 12 des azimutalen Schallstärkenverlaufs die sog. x-Achsen bilden, ein räumlicher Eindruck der Verteilung des Schallstärkenverlaufs, der gut den azimutalen Schallstärkenverlauf in verschiedenen Höhenebenen oberhalb des Beobachters erkennen läßt. Insbesondere dann, wenn die Kurvenzüge 12 mit zunehmendem Winkelwert des zugeordneten Elevationswinkels $\mathcal{E}$ mit zunehmender Helligkeit geschrieben werden (was wegen fehlender drucktechnischer Möglichkeiten in Fig. 2 nicht enthalten ist) hat der Betrachter des Panoramabildes 11 den Eindruck, von unten her in ein halbkugeliges Gewölbe hineinzusehen, in welchem er dann ohne weiteres Einfallsrichtungen von signifikanten Schallsignalen bezogen auf seinen Standort in räumlich kongruenter Anordnung vorfindet. Mit diesem Panoramabild 11 kann er sich der Herkunft signifikanter Schallsignale aus dem Raum sehr viel anschaulicher und einprägsamer bewußt werden. Diesen räumlichen Eindruck, wie er bei der Darstellung des Panoramabildes 11 auf einem Bildschirm einer Anzeigevorrichtung (z. B. PPI-Display) gewonnen wird, vermittelt einigermaßen anschaulich Fig. 3, während dieser räumliche Eindruck in Fig. 2 durch den nahe dem Zenit mit gleicher Helligkeit geschriebenen Kurvenzug 12 etwas verlorengeht.

nicht zu beeinträchtigen, werden diese Markierungsringe 16 in einer anderen Farbe wie die Kurvenzüge 12 dargestellt. Weiterhin empfiehlt es sich, die Winkelstufen der Kreise für die Markierungsringe 16 nicht kleiner als $10^o$ zu wählen.

Anstelle der Darstellung des azimutalen Schallstärkenverlaufs in verschiedenen parallelen Ebenen oberhalb der Passivsonaranlage oder des Betrachters, kann selbstverständlich auch der azimutale Schallstärkenverlauf in verschiedenen parallelen Ebenen unterhalb der Passivsonaranlage bzw. des Betrachters treten, was bei einer auf einem Oberflächenschiff installierten Passivsonaranlage zum Tragen kommt. Die Elevationswinkel $\epsilon$ sind dann negativ und werden als sog. Tiefenwinkel bezeichnet. Der Betrachter des Panoramabildes 11 gewinnt dann den Eindruck einer sich unter ihm befindlichen Halbkugelschale, in welche er von der Basis aus von oben hineinsieht und in welcher die räumliche Schallenergieverteilung sichtbar ist. An den Ausbuchtungen innerhalb der "Energiehalbkugel" kann er Einfallsrichtungen signifikanter Schallsignale in ihrer räumlichen Lage anschaulich erkennen.

Ist es in besonderen Fällen erforderlich, bei der Darstellung der Einfallsrichtung von Schallenergie sowohl positive als auch negative Elevationswinkel $\epsilon$ (Höhen- und Tiefenwinkel) zu berücksichtigen, so werden die Tiefenwinkeln zugeordneten Kurvenzüge 12 in einer anderen Farbe dargestellt als die Höhenwinkeln zugeordneten Kurvenzüge 12.

Für im Zenit der "Energiehalbkugel", also direkt oberhalb oder unterhalb der Passivsonaranlage, einfallende Schallenergie läßt sich kein Kurvenzug 12 darstellen. Hier wird zu einer Hilfsmaßnahme gegriffen, indem die Stärke eines einfallenden Signals als Zenitkreis 17 mit einem der Signalstärke entsprechenden Durchmesser, der maximal 5 % des größten Kreisliniendurchmessers beträgt, um den Bildmittelpunkt herum wiedergegeben wird.

PATENTANSPRÜCHE
================

1. Eindimensionales Rundumsichtbild einer Empfangsanlage für Wellenenergie zur Darstellung einer
Wellenenergieverteilung im Raum, insbesondere
Panoramabild einer Passivsonaranlage, bei welchem in einem geschlossenen Kurvenzug der Azimutwinkel der Einfallsrichtung von Wellenenergie als unabhängige Variable längs einer Kreislinie und die Stärke der Wellenenergie als abhängige Variable in zu dem Kreismittelpunkt weisender Radialrichtung abgetragen ist, dadurch
gekennzeichnet, daß für eine Vielzahl von vorgegebenen Elevationswinkeln ( $\epsilon$ ) der Einfallsrichtung von Wellenenergie solche Kurvenzüge (12)
bezogen auf jeweils eine von konzentrischen
Kreislinien dargestellt ist und daß die Kreisliniendurchmesser durch den mit dem größten
Kreisliniendurchmesser multiplizierten Kosinus
des zugeordneten Elevationswinkels ( $\epsilon$ ) festgelegt sind.

2. Bild nach Anspruch 1, dadurch gekennzeichnet,
daß die Kurvenzüge (12) zumindest ab einem zugeordneten Elevationswinkel ( $\epsilon$ ) von ca. 70°
mit zunehmenden Elevationswinkeln ( $\epsilon$ ) in der
Darstellungshelligkeit reduziert sind.

3. Bild nach Anspruch 1 oder 2, dadurch gekennzeichnet, daß die Kurvenzüge (12) für positive und negative Elevationswinkel (Höhenwinkel, Tiefenwinkel) farblich unterschiedlich dargestellt sind.

4. Bild nach einem der Ansprüche 1 bis 3, dadurch gekennzeichnet, daß Markierungsringe (16) für ausgewählte Elevationswinkel ($\varepsilon$) als konzentrische Kreise dargestellt sind.

5. Bild nach Anspruch 4, dadurch gekennzeichnet, daß die ausgewählten Elevationswinkel ($\varepsilon$) eine Stufung von $10^{o}$ nicht unterschreiten.

6. Bild nach Anspruch 4 oder 5, dadurch gekennzeichnet, daß die Markierungsringe (16) bildenden Kreislinien bezüglich der Kurvenzüge (12) andersfarbig dargestellt sind.

7. Bild nach einem der Ansprüche 1 bis 6, dadurch gekennzeichnet, daß ein auf die dem Elevationswinkel von $90^{o}$ zugehörige Kreislinie bezogener Kurvenzug als Zenitkreis (17) mit vorgegebenem Durchmesser dargestellt ist.

8. Bild nach Anspruch 7, dadurch gekennzeichnet, daß der Durchmesser des Zenitkreises (17) maximal 5 % des größten Kreisliniendurchmessers beträgt.

Fig. 1

0226841

N

4

1

2,5

3

12

11

Fig.2

Fig. 3

Fig. 4

0226841

Fig. 5

Europäisches Patentamt

**EUROPÄISCHER RECHERCHENBERICHT**

**0226841**
Nummer der Anmeldung

EP    86 11 6275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | US-A-3 602 877  (W.E. CURRIE et al.) <br> * Abbildung 2; Spalte  3,  Zeilen 1-14 * | 1,4 | G 01 S    3/84 <br> G 01 S    7/62 |
| A | GB-A-  774 148  (COLLINS RADIO) <br> * Abbildungen 1,2; Seite 1, Zeile 70  -  Seite 2, Zeile 9; Seite 2, Zeilen 20-52 * | 1 | |
| A | US-A-3 200 398  (M.K. WITT) <br> * Abbildung 1; Spalte  2,  Zeilen 7-35 * | 1 | |
| A | US-A-3 220 010  (R.S. HAND JR.) <br> *  Abbildungen  1,3;  Spalte  1, Zeilen 8-10; Spalte 3, Zeile 66 - Spalte 4, Zeile 63 * | 1,4 | **RECHERCHIERTE SACHGEBIETE (Int. Cl.4)** |
| A,D | DE-A-1 957 203  (F. KRUPP) <br> * Abbildung 10; Seite  30,  Zeile 17 - Seite 33, Zeile 1 * | 1 | G 01 S <br> G 01 R <br> G 06 F |

Der vorliegende Recherchenbericht wurde für alle Patentansprüche erstellt.

| Recherchenort | Abschlußdatum der Recherche | Prüfer |
|---|---|---|
| DEN HAAG | 13-03-1987 | CANNARD J.M. |